# EUROPÄISCHE PATENTANMELDUNG

(11) **EP 1 661 754 A2**
(43) Veröffentlichungstag der Anmeldung: **31.05.2006**
(21) Anmeldenummer: 05024422.7
(22) Anmeldetag: 09.11.2005
(51) Int. Cl.: B60N 2/58

(54) **Befestigungselement zum Befestigen eines Gegenstandes an einem Aufnahmeteil**

(30) Priorität: 24.11.2004 DE 202004018224 U
(71) Anmelder: Böllhoff Verbindungstechnik GmbH, 33649 Bielefeld (DE)
(72) Erfinder: Dembrowsky, Hans-Joachim, 21035 Hamburg (DE); Vorderwisch, Alexander, 33613 Bielefeld (DE); Jodeleit, Martin, 33617 Bielefeld (DE)
(74) Vertreter: Wehnert, Werner

(57) **Zusammenfassung**

Befestigungselement zum Befestigen eines Gegenstandes an einem Aufnahmeteil, mit einer Trägerplatte (6), einem Befestigungsabschnitt (12), der an einer ersten Seite (S 1) der Trägerplatte (6) vorgesehen ist und an der der Gegenstand befestigbar ist, einem Verankerungsabschnitt (8), der an der gegenüberliegenden zweiten Seite (S2) der Trägerplatte (6) vorgesehen ist und in ein Verankerungsloch (24) des Aufnahmeteils (4) einsetzbar und durch eine begrenzte Drehbewegung des Befestigungselementes (2) in dem Material des Aufnahmeteils (4) verankerbar ist, einem Antriebsabschnitt (10) zum Drehen des Befestigungselementes (2), und einem Arretierungsabschnitt (14), der mit dem Aufnahmeteil (4) zusammenwirkt, um die Drehbewegung des Befestigungselementes (2) zu begrenzen.

## Beschreibung

Die vorliegende Erfindung betrifft ein Befestigungselement zum Befestigen eines Gegenstandes an einem Aufnahmeteil, insbesondere zum Befestigen eines Bezugs an einer Kunststoffschale eines Fahrzeugsitzes.

Gängige Befestigungsarten zum Befestigen eines Sitzbezuges an einer Sitz- bzw. Rückenschale eines Fahrzeuges sind das Kunststoffschweißen oder mechanische Gewindeverbindungen. Im letzteren Fall werden beim Blasformen der Sitz- bzw. Rückenschale mittels im Werkzeug angeordneter Stifte Aufnahmevertiefungen gebildet, in die dann nachträglich metallische Gewindehülsen zwecks Befestigung der Sitzbezüge warm eingebettet werden. Jede dieser Befestigungsarten hat ihre Vor- und Nachteile, wobei in jedem Fall jedoch ein gewisser Kostenaufwand unvermeidlich ist.

Der vorliegenden Erfindung liegt die Aufgabe zugrunde, ein Befestigungselement zum Befestigen eines Gegenstandes an einem Aufnahmeteil zu schaffen, das kostengünstig herstellbar und in einfacher Weise montierbar ist.

Das Befestigungselement gemäß der vorliegenden Erfindung ist in Anspruch 1 definiert.

Das Befestigungselement besteht somit aus einer Trägerplatte, einem Befestigungsabschnitt, der an einer ersten Seite der Trägerplatte vorgesehen ist und an der der Gegenstand befestigbar ist, einem Verankerungsabschnitt, der an der gegenüberliegenden zweiten Seite der Trägerplatte vorgesehen ist und in ein Verankerungsloch des Aufnahmeteils einsetzbar und durch eine begrenzte Drehbewegung des Befestigungselementes in dem Material des Aufnahmeteils verankerbar ist, einem Antriebsabschnitt zum Drehen des Befestigungselementes, und einem Arretierungsabschnitt, der mit dem Aufnahmeteil zusammenwirkt, um die Drehbewegung des Befestigungselementes zu begrenzen.

Das Befestigungselement lässt sich als einstückiges Spritzgussteil aus Kunststoff herstellen. Die Herstellungskosten sind daher entsprechend gering. Ferner lässt es sich in sehr einfacher Weise mit dem Aufnahmeteil verbinden, da hierzu lediglich der Verankerungsabschnitt in das Verankerungsloch des Aufnahmeteils eingesteckt und das Befestigungselement um einen begrenzten Betrag gedreht werden muss. Wenn das Befestigungselement auf diese Weise mit dem Aufnahmeteil verbunden ist, kann der zu befestigende Gegenstand problemlos an dem Befestigungsabschnitt des Befestigungselementes angebracht werden.

Das erfindungsgemäß ausgebildete Befestigungselement ist besonders geeignet zum Befestigen eines Bezuges an einer Kunststoffschale eines Fahrzeugsitzes, wenngleich es auch zum Befestigen anderer Gegenstände an anderen Aufnahmeteilen verwendet werden kann.

Vorteilhafte Ausgestaltungen der Erfindung sind in den Unteransprüchen definiert.

Anhand der Zeichnung wird ein bevorzugtes Ausführungsbeispiel der Erfindung näher erläutert. Es zeigt:
Fig. 1 eine Seitenansicht eines erfindungsgemäß ausgebildeten Befestigungselementes;
Fig. 2 eine um 90° gedrehte Seitenansicht des Befestigungselementes in Fig. 1;
Fig. 3 eine Draufsicht auf einen Teil des Befestigungselementes von unten;
Fig. 4 eine Draufsicht auf das Befestigungselement von oben;
Fig. 5 einen Schnitt durch einen kleinen Abschnitt eines Aufnahmeteils zur Aufnahme des Befestigungselementes;
Fig. 6 eine perspektivische Darstellung des Befestigungselementes und Aufnahmeteils in verkleinertem Maßstab.

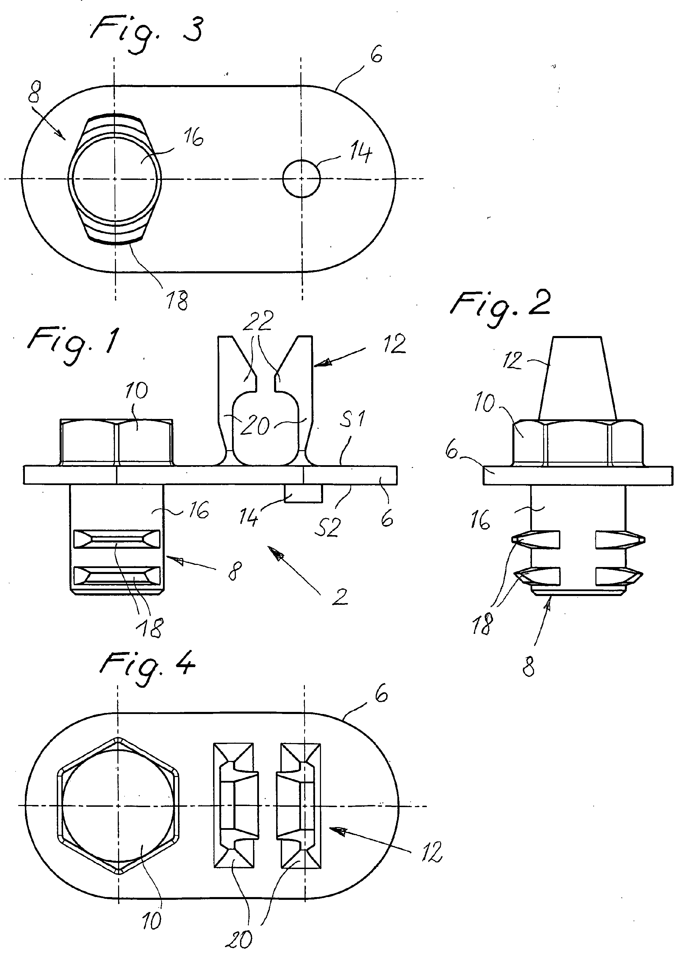

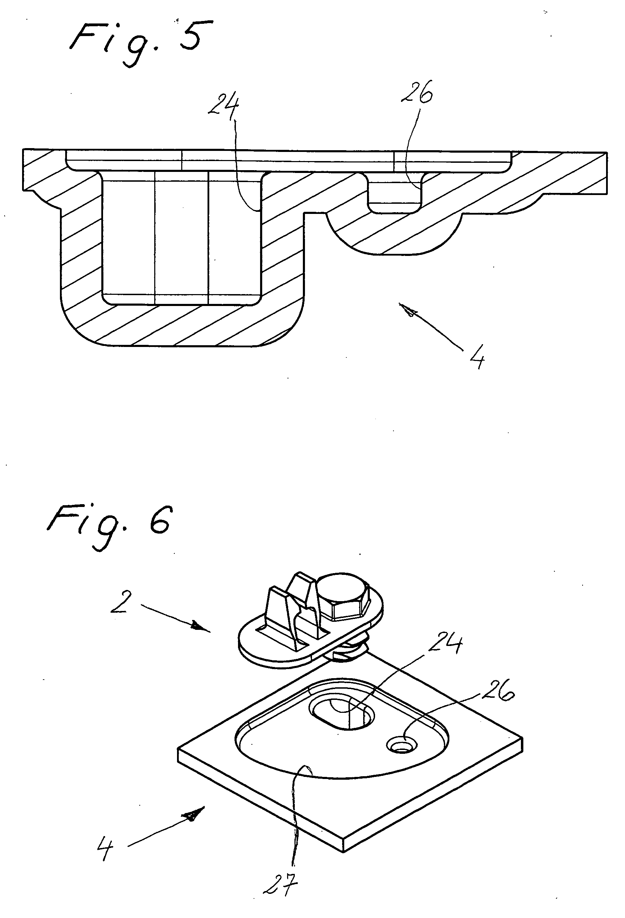

Das in den Figuren 1 bis 4 dargestellte Befestigungselement 2 dient zum Befestigen eines Gegenstandes in Form eines Sitzbezugs an einem Aufnahmeteil 4 (Fig. 5) in Form einer Sitz- oder Rückenschale eines Fahrzeugsitzes. Wie insbesondere in Fig. 1 zu sehen ist, besteht das Befestigungselement 2 aus einer Trägerplatte 6, einem Verankerungsabschnitt 8, einem Antriebsabschnitt 10, einem Befestigungsabschnitt 12 und einem Arretierungsabschnitt 14.

Die Trägerplatte 6 ist ein dünnwandiges ebenes Bauteil und hat eine längliche Form, wie insbesondere in Fig. 4 zu sehen ist. An einer ersten Seite S 1 der Trägerplatte 6 sind der Antriebsabschnitt 10 und der Befestigungsabschnitt 12 angeformt, während an der gegenüberliegenden zweiten Seite S2 der Trägerplatte 6 der Verankerungsabschnitt 8 und der Arretierungsabschnitt 14 angeformt sind. Die Anordnung ist hierbei so getroffen, dass der Verankerungsabschnitt 8 und der Antriebsabschnitt 10 zueinander fluchten, d. h. auf einer gemeinsamen Achse liegen, die senkrecht zur Trägerplatte 6 verläuft. Der Befestigungsabschnitt 12 ist seitlich versetzt zu dem Antriebsabschnitt 10 angeordnet, und der Arretierungsabschnitt 14 ist seitlich versetzt zu dem Verankerungsabschnitt 8 angeordnet.

Der Verankerungsabschnitt 8 dient zum Verbinden des Befestigungselementes 2 mit dem Aufnahmeteil 4. Er besteht aus einem an der Trägerplatte 6 angeformten Schaft 16 und mehreren von dem Schaft 16 abstehenden Verankerungsvorsprüngen. Die Verankerungsvorsprünge bestehen im dargestellten Ausführungsbeispiel aus vier Rippen 18, die in Umfangsrichtung des Schaftes 16 verlaufen, sich hierbei jedoch nur über einen Teil des Schaftumfangs erstrecken. Wie insbesondere in Fig. 3 zu sehen ist, erstrecken sich die Rippen 18 um ungefähr 90° über den Schaftumfang. Die Rippen 18 sind paarweise einander so zugeordnet, dass sie in zwei axial gegeneinander versetzten Reihen liegen und jeweils zwei Rippen diametral gegenüberliegend angeordnet sind.

Die Rippen 18 sind an ihren radial außen liegenden Umfangsrändern spitz zulaufend ausgebildet. Ferner sind sie an ihren Umfangsenden schräg verlaufend so ausgebildet, dass die beiden Umfangsenden jeder Rippe 18 einen Winkel von ungefähr 45° miteinander einschließen, wie insbesondere aus Fig. 3 hervorgeht.

Wie insbesondere in Fig. 3 zu sehen ist, haben der Schaft 16 und die Rippen 18 gemeinsam eine unrunde Außenkontur, im dargestellten Ausfiihrungsbeispiel eine ovale Außenkontur. Diese Außenkontur des Verankerungsabschnittes 8 entspricht in ihrer Form derjenigen des glattwandig ausgebildeten Aufnahmeloches 24 des Aufnahmeteils 4 (siehe Fig. 5 und 6), so dass der Verankerungsabschnitt 8 problemlos in das Verankerungsloch 24 des Aufnahmeteils 4 eingesetzt werden kann, wenn das Befestigungselement 2 eine vorgegebene Ausrichtung zu dem Aufnahmeteil 4 hat. Das Befestigungsteil 2 kann dann durch eine begrenzte Drehbewegung im Verankerungsloch 24 verankert werden, wie noch genauer erläutert wird.

Der Antriebsabschnitt 10 ist im dargestellten Ausführungsbeispiel als Sechskantabschnitt zum Ansetzen eines entsprechenden Werkzeugs ausgebildet, um das Befestigungselement 2 um die durch den Antriebsabschnitt 10 und den Verankerungsabschnitt 8 verlaufende Achse drehen zu können. Es versteht sich jedoch, dass der Antriebsabschnitt 10 in beliebig anderer Weise zum Ansetzen eines entsprechenden Werkzeuges ausgebildet sein kann.

Der Befestigungsabschnitt 12 ist im dargestellten Ausführungsbeispiel als Halteclip zum Einhaken des zu befestigenden Gegenstandes (Sitzbezuges) ausgebildet. Der Halteclip besteht aus zwei von der Trägerplatte 6 abstehenden elastischen Armen 20, die mit einander zugewandten Haken 22 zum Einhaken des Sitzbezuges (nicht gezeigt) versehen sind, wie insbesondere in den Figuren 1 und 4 zu erkennen ist.

Der Arretierungsabschnitt 14 besteht aus einem warzenartigen zylindrischen Arretierungsvorsprung, der mit einer entsprechend ausgebildeten Arretierungsvertiefung 26 im Aufnahmeteil 4 zusammenwirkt, um das Befestigungsteil 2 am Aufnahmeteil 4 einer vorgegebenen Position und Ausrichtung festzulegen, wie noch genauer erläutert wird.

Das Befestigungselement 2 ist ein einstückiges Bauteil, das zweckmä-βigerweise durch Spritzgießen hergestellt wird. Es besteht aus einem faserverstärkten schlagzähmodifizierten Kunststoff wie z. B. einem Polyamid mit einem hohen Glasfaseranteil. In Frage kommt beispielsweise ein Werkstoff wie PA6-GF50. In jedem Fall muss das Material des Befestigungselementes 2 eine größere Härte als das Material des Aufnahmeteils 4 haben, das beispielsweise ein Blasformteil aus einem vergleichsweise weichen Kunststoff wie ABS/PC hergestellt ist.

Es wird nun die Montage des Befestigungselementes 2 an dem Aufnahmeteil 4 unter Bezugnahme insbesondere auf Fig. 6 beschrieben.

Zunächst wird das Befestigungselement 2 an dem Aufnahmeteil 4 so angesetzt, dass der Verankerungsabschnitt 8 in das Verankerungsloch 24 des Aufnahmeteils 4 eintreten kann. Eine das Verankerungsloch 24 und die Arretierungsvertiefung 26 umgebende flache Ausnehmung 27 erleichtert herbei das Ausrichten und Einsetzen des Befestigungselementes 2. Der Verankerungsabschnitt 8 wird in das Verankerungsloch 24 eingedrückt, bis die Trägerplatte 6 in Anlage mit dem Aufnahmeteil 4 kommt. Wie bereits erwähnt, hat das glattwandige Aufnahmeloch 24 eine ovale Innenkontur entsprechend der ovalen Außenkontur des Verankerungsabschnitts 8, so dass der Verankerungsabschnitt 8 nur in einer bestimmten Ausrichtung in das Verankerungsloch 24 des Aufnahmeteils 4 eingesetzt werden kann. In dieser Ausrichtung ist der Arretierungsabschnitt 14 des Befestigungselementes 2 um ungefähr 90° gegenüber der Arretierungsvertiefung 26 des Aufnahmeteils 4 versetzt.

In dieser Position steht die Trägerplatte 6 unter einer gewissen Vorspannung, da der Arretierungsvorsprung 14 auf der Oberseite des Aufnahmeteils 4 aufliegt und die Trägerplatte 6 geringfügig durchgebogen ist. Wenn nun das Befestigungselement 2 mittels eines am Antriebsabschnitt 10 angreifenden Werkzeuges (nicht gezeigt) um die durch den Antriebsabschnitt 10 und den Verankerungsabschnitt 8 verlaufende Achse gedreht wird, graben sich die spitz zulaufenden Rippen 18 des Verankerungsabschnittes 8 in das weichere Material des Aufnahmeteils 4 ein. Auf diese Weise entsteht eine formschlüssige Verbindung zwischen dem Verankerungsabschnitt 8 und dem Aufnahmeteil 4.

Am Ende der um ungefähr 90° erfolgenden Drehbewegung des Aufnahmeteils 2 tritt der Arretierungsvorsprung 4 in die Arretierungsvertiefung 26 des Aufnahmeteils 4 ein. Hierdurch wird einerseits das Ende der Drehbewegung und somit die Endposition des Befestigungselementes 2 definiert und zum anderen eine bestimmte geometrische Ausrichtung des Befestigungselementes 2 festgelegt, so dass der Befestigungsabschnitt 12 eine bestimmte Lage und Ausrichtung relativ zu dem Aufnahmeteil einnimmt.

Das Befestigungselement 2 ist nun mit dem Aufnahmeteil 4 fest verbunden, und zwar in einer vorgegebenen Position und einer vorgegebenen Ausrichtung, so dass nun der zu befestigende Gegenstand (Sitzbezug) am Befestigungsabschnitt 12 angebracht werden kann.

## Patentansprüche

1. Befestigungselement zum Befestigen eines Gegenstandes an einem Aufnahmeteil, mit
einer Trägerplatte (6),
einem Befestigungsabschnitt (12), der an einer ersten Seite (S1) der Trägerplatte (6) vorgesehen ist und an der der Gegenstand befestigbar ist,
einem Verankerungsabschnitt (8), der an der gegenüberliegenden zweiten Seite (S2) der Trägerplatte (6) vorgesehen ist und in ein Verankerungsloch (24) des Aufnahmeteils (4) einsetzbar und durch eine begrenzte Drehbewegung des Befestigungselementes (2) in dem Material des Aufnahmeteils (4) verankerbar ist,
einem Antriebsabschnitt (10) zum Drehen des Befestigungselementes (2), und
einem Arretierungsabschnitt (14), der mit dem Aufnahmeteil (4) zusammenwirkt, um die Drehbewegung des Befestigungselementes (2) zu begrenzen.

2. Befestigungselement nach Anspruch 1, **dadurch gekennzeichnet, dass** der Antriebsabschnitt (10) und der Verankerungsabschnitt (8) an gegenüberliegenden Seiten (S1, S2) der Trägerplatte (6) fluchtend zueinander angeordnet sind.

3. Befestigungselement nach Anspruch 2, **dadurch gekennzeichnet, dass** der Antriebsabschnitt (10) an der ersten Seite (S1) der Trägerplatte (6) seitlich versetzt zu dem Befestigungsabschnitt (12) angeordnet ist.

4. Befestigungselement nach einem der vorhergehenden Ansprüche, **dadurch gekennzeichnet, dass** der Arretierungsabschnitt (14) an der zweiten Seite (S2) der Trägerplatte (6) seitlich versetzt zu dem Verankerungsabschnitt (8) angeordnet ist.

5. Befestigungselement nach einem der vorhergehenden Ansprüche, **dadurch gekennzeichnet, dass** der Verankerungsabschnitt (8) einen Schaft (16) und mehrere vom Schaft abstehende Verankerungsvorsprünge (18) aufweist, die zusammen eine unrunde Außenkontur haben, welche der Innenkontur des glattwandigen Aufnahmeloches (24) des Aufnahmeteils (4) entspricht, so dass sich die Verankerungsvorsprünge (18) bei der begrenzten Drehbewegung des Befestigungselementes (2) in das Material des Aufnahmeteils (4) eingraben.

6. Befestigungselement nach Anspruch 5, **dadurch gekennzeichnet, dass** die Außenkontur des Verankerungsabschnittes (8) des Befestigungselementes (2) und die Innenkontur des Verankerungsloches (24) des Aufnahmeteils (4) eine ovale Form haben.

7. Befestigungselement nach Anspruch 5 oder 6, **dadurch gekennzeichnet, dass** die Verankerungsvorsprünge aus an ihren Außenseiten spitz zulaufenden Rippen (18) bestehen, die in Umfangsrichtung des Schaftes (16) verlaufen und sich hierbei nur über einen Teil des Schaftumfanges erstrecken.

8. Befestigungselement nach einem der vorhergehenden Ansprüche, **dadurch gekennzeichnet, dass** der Arretierungsabschnitt des Befestigungselementes (2) aus einem an der Trägerplatte (6) vorgesehenen Arretierungsvorsprung (16) besteht, der am Ende der begrenzten Drehbewegung des Befestigungselementes (2) in eine entsprechend ausgebildete Arretierungsvertiefung (26) des Aufnahmeteils (4) eintritt.

9. Befestigungselement nach einem der vorhergehenden Ansprüche, **dadurch gekennzeichnet, dass** der Befestigungsabschnitt (12) aus einem Halteclip für den zu befestigenden Gegenstand besteht.

10. Befestigungselement nach Anspruch 9, **dadurch gekennzeichnet, dass** der Halteclip aus zwei von der Trägerplatte (6) abstehenden elastischen Armen (20) mit einander zugewandten Haken (22) zum Einhaken des Gegenstandes bestehen.

11. Befestigungselement nach einem der vorhergehenden Ansprüche, **dadurch gekennzeichnet, dass** es als einstückiges Spritzgussteil aus Kunststoff ausgebildet ist.

12. Befestigungselement nach Anspruch 11, **dadurch gekennzeichnet, dass** es aus einem faserverstärkten schlagzähmodifizierten Kunststoff besteht.

13. Befestigungselement nach einem der vorhergehenden Ansprüche, **dadurch gekennzeichnet, dass** es zum Befestigen eines Bezugs an einer Kunststoffschale eines Fahrzeugsitzes ausgebildet ist.
